# EUROPEAN PATENT SPECIFICATION

(11) **EP 3 566 764 B1**
(45) Date of publication and mention of the grant of the patent: **13.01.2021**
(21) Application number: 19172557.1
(22) Date of filing: 03.05.2019
(51) Int. Cl.: B01D 61/42, B01D 63/08, B01D 65/08

(54) **ELECTRODIALYSIS DEVICE**
ELEKTRODIALYSEVORRICHTUNG
DISPOSITIF D'ÉLECTRODIALYSE

(30) Priority: 03.05.2018 EP 18170565
(43) Date of publication of application: 13.11.2019
(73) Proprietor: Hydro Volta, 3001 Leuven (BE)
(72) Inventor: BRIK, George, 3090 Overijse (BE); YOUSEF, Yousef, 2631LP Nootdorp (NL)
(74) Representative: Savoye, Anne

(56) References cited:
- CN-A- 102 476 031
- JP-U- H0 585 474

## Description

### FIELD OF INVENTION

The present invention pertains to the field of liquid treatment, especially aqueous liquid treatment. In particular, the invention relates to an electrodialysis device for use in removing ions from a liquid such as an aqueous liquid.

### BACKGROUND OF INVENTION

Liquids that contain high quantities of dissolved species such as salt ions are undesirable for some applications. Industrial or household uses of water may require limited or specific hardness of water: for example, pipes may be fouled or blocked by deposits caused by excessive ion contents, and the amount of laundry detergent to be used has to be adjusted with the hardness of the water.

Electrodialysis is a technology allowing transportation of ions from one liquid flow to another under the influence of an applied electric potential difference. It can thus be used to remove ions from a raw liquid (*e.g.,* hard water) in order to purify this liquid (*e.g.,* reduce its hardness). It differs from other purification techniques (*e.g*., membrane filtration or osmosis) in that ions are moved away from the treated liquid rather than immobilized in a specific part of the purification device (*e.g.,* a filtration membrane). With reference to the ion content, purified liquid is called "dilute" while the liquid storing the ions is called "concentrate".

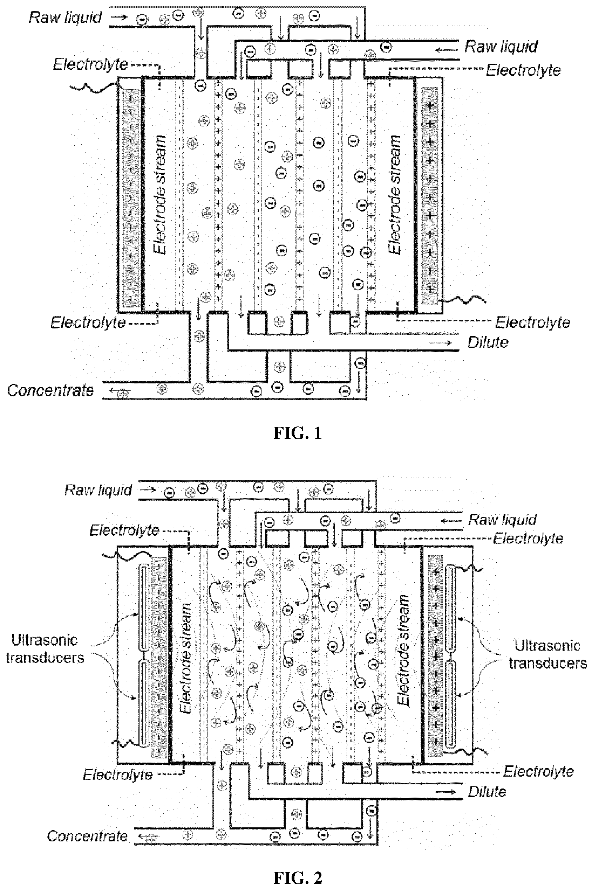

An electrodialysis device comprises an anode and a cathode, this pair of electrodes being used to apply an electric potential difference on the liquid circulating between ion-exchange membranes, so that the ions are moved from the dilute and displaced to the concentrate as shown on the diagram of **Figure 1****.** Small-scale electrodialysis devices may comprise only one pair of anion-exchange and cation-exchange membranes, but industrial-scale systems use membrane blocks (or "membrane packs") consisting of alternating anion and cation exchange membranes in order to enhance the throughput of the electrodialysis process. Because the quantity of ions in the raw liquid is generally far less than the amount of solvent, electrodialysis generally offers higher feed recovery. It is used in many applications such as seawater desalination and salt production, drinking water production, demineralization and pre-demineralization, food processing, etc.

However, electrodialysis suffers from specific limitations, especially concerning fouling and slow ion transfer. Fouling can especially consist of scale formation (caused by inorganic deposits such as salts) and/or (bio)fouling caused by organic material such as large organic molecules or living organisms (*e.g*. algae). It requires chemical agents to remove the fouling, which may decrease the ion-exchange membranes efficiency and increase their power consumption. Slow ion transfer is due to the insufficient laminar mixing inside the spacer channels of dilute and concentrate, caused by the limited volume between the membranes. This can be counteracted by increasing the membrane surface area, but this also increases the capital cost and thus the overall treatment cost.

Ultrasonic transducers are commonly used as elements of mixing or shaking devices, because ultrasounds may facilitate dissolution of solid material in a liquid and/or generate internal flux in a liquid. CN 102476031 discloses that ultrasounds could be used in an electrodialysis system through application of ultrasounds inside the dilute and concentrate compartments by means of an external ultrasonic transducer; to avoid pollution of ion-exchange membranes. However, existing systems such as the one disclosed in CN 102476031 are not appropriate for medium-scale and large-scale industrial use, because the number of ion-exchange membranes required in industrial devices increases the thickness of the membrane block and thus disturbs the effect of ultrasounds. The distance between the external ultrasonic transducer which emits ultrasounds and the liquid to be mixed within the internal ion-exchange membranes increases, and the quantity of material to be traversed by ultrasounds also increases so that frequency shifting and/or attenuation (decrease in energy intensity) occur. Therefore, the efficiency of the mixing and/or cleaning by ultrasounds decreases inversely with the size of the electrodialysis system. Higher power and/or higher ultrasound frequency are thus needed in order to achieve the same result. However, increasing power or using high frequencies damages and/or reduces the lifetime of the electrodialysis membrane and the ultrasonic transducer, thus increasing manufacture costs. Use of high power also increases operation costs. Moreover, the use of an ultrasonic transducer as disclosed in CN 102476031 results in non-homogeneous distribution of the ultrasounds throughout the electrodialysis device, so that mixing efficiency is limited. Furthermore, material damage may occur, especially pitting of electrodes coating and membrane block premature wear.

The Applicant conducted in-depth research and conceived a novel electrodialysis module overcoming the limitation of prior art devices, and a build-in for use in such electrodialysis module.

### SUMMARY

This invention relates to an electrodialysis module comprising:
- at least a first chamber and a second chamber,
   wherein each chamber comprises a pair of planar electrodes comprising a planar cathode and a planar anode, parallel to one another and separated by a membrane pack, and wherein each chamber has a mean plane parallel to the planes of the planar electrodes,
- an inlet, a first outlet, a second outlet,
   wherein the inlet is in fluid communication with each of the chambers, and the first outlet and the second outlet are each in fluid communication with each of the chambers; and wherein the inlet is configured to introduce raw liquid into the chambers, the first outlet is configured to remove diluted liquid from the chambers, and the second outlet is configured to remove concentrated liquid from the chambers, and
- at least three planar ultrasonic transducers;
wherein the electrodialysis module comprises successively, in a direction from the inlet towards the first and second outlets, a first transducer, the first chamber, a second transducer, the second chamber and the third transducer; the transducers and the mean planes of the chambers being disposed parallel to one another.

According to an embodiment, the electrodialysis module comprises a third chamber and a fourth planar ultrasonic transducer; wherein the electrodialysis module comprises successively, in a direction from the inlet towards the first and second outlets, a first transducer, the first chamber, a second transducer, the second chamber, a third transducer, the third chamber, and the fourth transducer; the transducers and the mean planes of the chambers being disposed parallel to one another.

According to an embodiment, the electrodialysis module comprises one or more additional chambers and the same number of additional planar ultrasonic transducers; wherein the electrodialysis module comprises successively, in a direction from the inlet towards the first and second outlets, a first transducer before the first chamber, each of the chambers followed by one of the transducers, the transducer being located between two of the chambers, and the last transducer after the last chamber; the transducers and the mean planes of the chambers being disposed parallel to one another.

According to an embodiment, the electrodialysis module comprises a fourth ultrasonic transducer; characterized in that the electrodialysis module comprises successively, in a direction from the inlet towards the first and second outlets, a first transducer, the first chamber, a second transducer, a third transducer, the second chamber, and the fourth transducer; the transducers and the mean planes of the chambers being disposed parallel to one another.

According to an embodiment, the electrodialysis module comprises one or more additional chambers and two additional ultrasonic transducers per additional chamber; wherein the electrodialysis module comprises successively, in a direction from the inlet towards the first and second outlets, a first transducer before the first chamber, each of the chambers followed by two of the transducers, the two transducers being located between two of the chambers, and the last transducer after the last chamber; the transducers and the mean planes of the chambers being disposed parallel to one another.

According to an embodiment, the electrodialysis module comprises, the two transducers located between two of the chambers are separated by a planar ultrasound isolating material, the material and the transducers being disposed parallel to one another; and wherein the area of the faces of the material is equal or superior to the area of the faces of each of the two transducers.

According to an embodiment, each transducer is coupled with adjacent electrodes by coupling means.

According to an embodiment, the transducers are configurated to emit in multi-frequency. In an embodiment, at least two of the transducers are configurated to emit in different multi-frequency programs, the transducers being adjacent to different chambers.

This invention also relates to a system comprising two or more electrodialysis modules according to the invention.

This invention also relates to a planar assembly for an electrodialysis module according to the invention, comprising a planar ultrasonic transducer, and a pair of planar electrodes each configured to cooperate with a membrane pack, wherein the planar assembly comprises successively an electrode, the transducer, and the other electrode; and wherein the transducer is coupled with the electrodes by coupling means.

According to an embodiment, the coupling means are adhesive means, preferably glue such as a metallic adhesive. In an embodiment, the adhesive means are a metallic adhesive.

According to an embodiment, the surface area of the faces of the transducer is equal or superior to the surface area of the faces of the electrodes.

According to an embodiment, each of the electrodes independently consists of: a base comprising a metal selected from stainless steel, titanium, graphite, carbon, nickel, platinum and combinations thereof; and a coating comprising a metal selected from platinum, ruthenium, mixed metal oxides, graphite, carbon and combinations thereof.

### DEFINITIONS

In the present invention, the following terms have the following meanings:
- **"Aqueous liquid"** refers to a liquid which comprises molecular water (H₂O) in an amount of at least 75% w/w, preferably at least 90% w/w, more preferably at least 99% w/w, even more preferably at least 99.9% w/w, even more preferably at least 99.99% w/w. An example of aqueous liquid is an aqueous solution.
- **"Cell pair"** refers to an elemental constituent of an electrodialysis stack consisting of a set of anion-exchange membrane(s), cation-exchange membrane(s) and/or bipolar exchange membrane(s), optionally together with spacers and/or gaskets. A cell pair may for example refer to a pair consisting of one cation-exchange membrane and one anion-exchange membrane configurated in parallel. Cell pair also refers to multi-compartment arrangements of ion exchange membranes, *e.g*., those known as "cell triplets" or "cell quadruplets". Various kind of cell pairs are known of a skilled artisan. In industrial electrodialysis modules, instead of using individual cell pairs, a plurality of cell pairs is assembled so as to form a "membrane block".
- **"Concentrated liquid", "concentrate"** and **"brine"** are synonyms and refer to a liquid obtained from a raw liquid which has been treated by a device or by a method according to the invention, wherein the ion content is higher than in the raw liquid. In the invention, concentrated liquid may comprise water (H₂O). In preferred embodiments of the invention, concentrated liquid is an aqueous liquid. Abbreviation for concentrated liquid is "CL".
- **"Diluted liquid"** or **"dilute"** are synonyms and refer to a liquid obtained from a raw liquid which has been treated by a device or by a method according to the invention, wherein the ion content is lower than in the raw liquid. In the invention, treated liquid may comprise water (H₂O). In preferred embodiments of the invention, treated liquid is an aqueous liquid. Abbreviation for diluted liquid is "DL".
- **"Direct physical contact"** refers to a structural feature of two coupled objects. Objects in direct physical contact are either in physical contact, or physically separated by their coupling means only. For example, two objects coupled together by glue are in direct physical contact, although they may be physically separated by a layer of glue.
- **"Electrodialysis"** refers to a technique which is used to transport salt ions from one liquid through ion-exchange membranes to another liquid under the influence of an applied electric potential difference. Various kind and embodiments of electrodialysis techniques are known of a skilled artisan.
- **"Electrode"** refers to an electrical conductor used to make contact between an electrical circuit and a liquid (electrolyte) in an electrochemical cell, for example an electrodialysis module. An electrode is either an **"anode"** or a **"cathode":** the anode is the electrode at which electrons leave the cell and oxidation occurs (indicated by a plus symbol, "+"), and the cathode is the electrode at which electrons enter the cell and reduction occurs (indicated by a minus symbol, "-"). Definition of an electrode as the anode or the cathode depends on the direction of electrical current through the cell. Various kind of electrodes are known of a skilled artisan.
- **"Frequency"** refers to the ultrasound frequency emitted by one or more ultrasonic transducers within an electrodialysis device, expressed in hertz (Hz) or s⁻¹. **"High frequency"** means frequency ranging from 100 kHz to 2 MHz and **"low frequency"** means frequency ranging from 20 kHz to 60 kHz.
- **"Hardness"** refers to the quantity of ions dissolved in water. It is usually reported as an equivalent quantity of calcium carbonate (CaCO₃), e.g. in milligrams per liter (mg/L). Calcium and magnesium salts dissolved in water are the most commonly found salts present in water, together with rarer compounds such as iron, strontium, and manganese salts. Below 60 mg/L of calcium carbonate water is typically classified as "soft"; between 61 and 120 mg/L as "moderately hard"; between 121 mg/L and 180 mg/L as "hard"; and above than 180 mg/L as "very hard".
- **"Ultrasound-isolating"** refers to a property of a material which reduces the intensity of ultrasounds passing through the material by at least 50%, preferably at least 75%, more preferably at least 90%. Preferably, an ultrasound-isolating material prevent the passage of ultrasounds though the material, *i.e.,* reduce ultrasounds to a level which is not detectable by common measurement methods in the art.
- **"Planar"** refers to a property of an object which comprises two parallel flat surfaces ("faces") closed by a narrow surface ("side") at their common physical boundary ("periphery"), such as for example a sheet or a plate. A planar object can have various shapes of faces, such as for example octagonal-, rectangular-, square- or disc-shaped faces. The physical characteristics that can be associated with a planar object include the distance between its faces ("thickness"), the length of its periphery ("perimeter"), the dimension of its faces ("area"). A planar object has a thickness substantially lower than each of the dimensions of its faces, for example a planar object whose faces are in square shapes may have a side length greater than or equal to 5 times its thickness, preferably 10 times lower; and a planar object whose faces are in disc shape may have a diameter greater than or equal to 5 times its thickness, preferably 10 times its thickness.
- **"Power"** refers, unless otherwise stated, to electric power, *i.e.,* the rate, per unit time, at which electrical energy is transferred by an electric circuit, expressed in watt (W or J.s⁻¹) which is provided to an electrodialysis device or system, or to a part of such device or system.
- **"Raw liquid"** refers to a liquid comprising solubilized ions and susceptible to be treated by a device or by a method according to the invention. In the invention, raw liquid may comprise water (H₂O). In preferred embodiments of the invention, raw liquid is an aqueous liquid. Abbreviation for raw liquid is "RL".
- **"Membrane block"** or **"membrane pack"** are synonyms and refer to an electrodialysis membrane block, *i.e.,* the part of an electrodialysis cell wherein the ions are separated by ion-exchange membranes under the influence of the electric potential difference applied by the electrodes. A membrane block comprises at least one cell pair, preferably at least 5 cells pairs, more preferably at least 10 cell pairs. A membrane block may typically comprise from 20 to 300 cell pairs, preferably from 20 to 600 cell pairs, for example from 50 to 600 cell pairs. Various kind of membrane blocks are known of a skilled artisan.
- **"Transducer"** or **"ultrasonic transducer"** are synonyms and refer to a device which converts electrical signals into ultrasounds ("transmitter"), which converts ultrasounds into electrical signals ("receiver"), or which can both emits and converts electrical signals and ultrasounds ("transceiver"). Unless otherwise stated, in the context of the invention, a transducer is a transmitter or a transceiver. Electrical signals are typically AC voltage. In the invention, "a transducer" or "one transducer" may also refer to a plurality of individual transducers having the same configuration, which are associated and operated together as one unique transducer. For example, a transducer may be a plate comprising a plurality of individual transducers.
- **"Treating"** refers to a process for increasing or decreasing, by means of electrodialysis, the ion content of a raw liquid (RL) in order to obtain a concentrate (CL) and/or a dilute (DL).

### DETAILED DESCRIPTION

The following detailed description will be better understood when read in conjunction with the drawings. For the purpose of illustrating, the device is shown in the preferred embodiments. It should be understood, however that the invention is not limited to the precise arrangements, structures, features, embodiments, and aspects shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

Without linking the invention with any theory, the diagram of **Figure 2** illustrates the general principle of operation of one of the chambers of an electrodialysis module according to the invention, comprising ultrasonic transducers which emit ultrasounds which circulate throughout the membrane block, improving the cleaning and/or mixing within the membrane block, and thereby the efficiently of the electrodialysis process in the electrodialysis device.

This invention relates to an electrodialysis module which is an electrodialysis device comprising:
- at least a first chamber and a second chamber,
- an inlet, a first outlet, a second outlet, and
- at least three ultrasonic transducers.

Each chamber comprises a pair of electrodes comprising a cathode and an anode separated by a membrane block. The inlet is in fluid communication with each of the chambers, and the first outlet and the second outlet are each in fluid communication with each of the chambers.

The electrodialysis device according to the invention comprises successively, in a direction from the inlet towards the first and second outlets, a first transducer, the first chamber, a second transducer, the second chamber and the third transducer, disposed parallel to one another.

Due to this configuration of the electrodialysis device according to the invention, ultrasounds are emitted both from the ends of the module and also from the outside of the module so that, for example:
- quality of ultrasound cleaning and/or mixing is optimized,
- energy consumption is minimized, and/or
- material damage or premature wear of module constituents is prevented,
whatever the size of the ion-exchange membrane block.

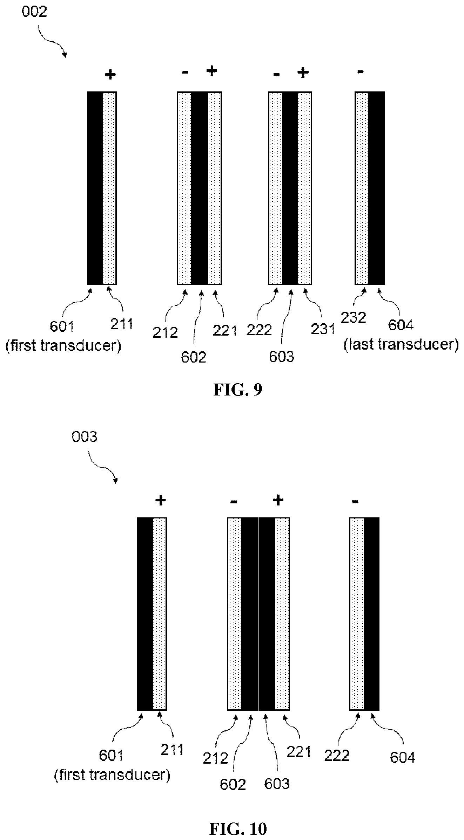

According to an embodiment, the electrodialysis device comprises a third chamber and a fourth ultrasonic transducer; and the electrodialysis device comprises successively, in a direction from the inlet towards the first and second outlets, a first transducer, the first chamber, a second transducer, the second chamber, a third transducer, the third chamber, and the fourth transducer disposed parallel to one another. An example of such arrangement is shown on **Figure 9****.**

According to an embodiment, the electrodialysis device comprises one or more additional chambers and the same number of additional ultrasonic transducers; and comprises successively, in a direction from the inlet towards the first and second outlets, a first transducer before the first chamber, each of the chambers followed by one of the transducers, the transducer being located between two of the chambers, and the last transducer after the last chamber; disposed parallel to one another. In this embodiment, the electrodialysis device comprises a number "Ni" of chambers and comprises Ni + 1 ultrasonic transducers.

The electrodialysis device according to the invention is advantageous because the presence of the ultrasonic transducers inside of the module and their parallel disposition makes that the localization and the intensity of ultrasounds are homogenously distributed throughout the chambers and in the treated liquid; so that cleaning of the membrane blocks and/or mixing of the liquid is improved compared, for instance, to prior art modules wherein ultrasounds come only from the ends of the module.

The electrodialysis device according to the invention is also advantageous because the serial arrangement of the ultrasonic transducers in the module and their parallel disposition require less energy input to emits the same amount of ultrasounds in the chambers; so that the energy consumption is minimized compared, for instance, to prior art modules wherein the ultrasonic transducers are not in serial arrangement or are not disposed parallel to each other and/or to the chambers.

The electrodialysis device according to the invention is also advantageous because the serial arrangement of the ultrasonic transducers in the module and their parallel disposition makes that the localization and the intensity of ultrasounds are homogenously distributed throughout the electrodialysis device, especially in the membrane blocks and in the electrodes; so that material damage or premature wear of module constituents is limited or prevented compared, for instance, to prior art modules wherein the ultrasonic transducers are not in serial arrangement or not parallel to each other and/or to the chambers.

The module according to the invention is also advantageous regarding standardization of electrodialysis systems because it allows to use the same power and the same ultrasound frequency for a series of modules aligned within an electrodialysis apparatus.

According to an embodiment, the electrodialysis device comprises a fourth ultrasonic transducer; and the electrodialysis device comprises successively, in a direction from the inlet towards the first and second outlets, a first transducer, the first chamber, a second transducer, a third transducer, the second chamber, and the fourth transducer disposed parallel to one another. An example of such arrangement is shown on **Figure 10****.**

According to an embodiment, the electrodialysis device comprises four ultrasonic transducers, one or more additional chambers and two ultrasonic transducers per additional chamber; and comprises successively, in a direction from the inlet towards the first and second outlets, a first transducer before the first chamber, each of the chambers followed by two of the transducers, the two transducers being located between two of the chambers, and the last transducer after the last chamber; disposed parallel to one another. In this embodiment, the electrodialysis device comprises a number "N₂" of chambers and comprises 2N₂ ultrasonic transducers.

This embodiment is advantageous because different ultrasounds can be sent from the beginning of pathlength and at the end of the pathlength of the flow.

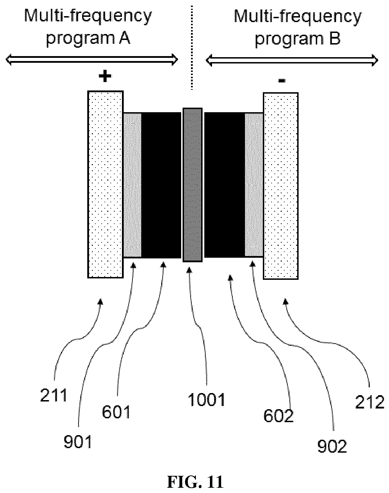

In an embodiment, the two transducers located between two of the chambers are separated by an ultrasound-isolating material, the two transducers and the ultrasound-isolating material being disposed parallel to one another, and the area of the faces of the ultrasound-isolating material is equal or superior to the area of the faces of each of the two transducers. In a specific embodiment, the ultrasound-isolating material is planar. An example of such arrangement is shown on **Figure 11****.** Non-limitative examples of ultrasound-isolating material are mineral wool, fiberglass, foamed plastics, acoustic sealants and mixtures thereof. In an embodiment, the ultrasound-isolating material is planar, *e.g.,* is an ultrasound-isolating "sheet" or "plate".

These embodiments are advantageous because the ultrasound-isolating material prevents the propagation of ultrasounds from one chamber to another, so that is possible to have different frequency and/or intensity of ultrasounds in different parts of the electrodialysis device (*e.g.,* in different sides thereof) and/or in each individual chamber.

In a specific embodiment, the ultrasound-isolating material is coupled with the two transducers by adhesive means known in the art, for example the ultrasound-isolating material may be an isolating adhesive (*e.g*., adhesive isolating foam). This embodiment is advantageous because coupling transducers with the ultrasound-isolating material solidarizes elements of the electrodialysis device (*i.e.,* they do not move); so that, for example, transportation of the electrodialysis device is easier and overall resistance of the electrodialysis device is improved.

According to an embodiment, the transducers do not comprise a polymer coating for preventing adhesion of a transducer to another one when transducers are packed, such as for example polyamide or polyimide coating.

According to an embodiment, the electrodes are in metal material. In an embodiment, the electrodes are made of a base and optionally a coating. In an embodiment, the base comprises or consists of stainless steel, titanium, graphite, carbon, nickel, platinum, or the likes, or combinations thereof. In an embodiment, the coating comprises or consists of platinum, ruthenium, mixed metal oxides, graphite, carbon, or the likes, or combinations thereof. A preferred example of electrode is titanium (Ti) coated by platinum (Pt). According to an embodiment, the electrodes do not comprise silver nor copper. According to an embodiment, each of the electrodes independently consists of a base comprising a metal selected from stainless steel, titanium, graphite, carbon, nickel, platinum and combinations thereof; and a coating comprising a metal selected from platinum, ruthenium, mixed metal oxides, graphite, carbon and combinations thereof.

According to an embodiment, each transducer is coupled with adjacent electrodes by coupling means.

This embodiment is advantageous because coupling electrodes and transducers solidarizes elements of the electrodialysis device (*i.e.,* they do not move); so that, for example, transportation of the electrodialysis device is easier and overall resistance of the electrodialysis device is improved, for instance, to prior art modules wherein electrodes and/or transducers are not coupled.

In an embodiment, the coupling means are adhesive means. In a specific embodiment, the adhesive means are glue such as for example resin or epoxy. Preferably, the adhesive means is a metallic adhesive. Non-limitative examples of metallic adhesive are polyurethane, silicon, epoxy, cyanoacrylate resins and mixtures thereof.

These embodiments are advantageous because adhesive-coupled electrodes and transducers keep the original frequency and intensity of ultrasounds clear and unaffected; so that propagation of specific frequencies throughout the electrodialysis device is optimized compared, for instance, to prior art modules wherein electrodes and/or transducers are not adhesive-coupled. Metallic adhesives are especially advantageous for the propagation of specific frequencies.

According to an embodiment, there is no separation sheet, especially no rigid separation sheet, between the transducer and adjacent electrodes. In an embodiment, the transducer and adjacent electrodes are coupled by coupling means and are in direct physical contact. As defined previously, in the context of the invention, "direct contact" between two coupled objects means that the objects are either in physical contact, or physically separated by their coupling means only. In this embodiment, there is thus no physical separation between the transducer and adjacent electrodes, except optional coupling means, such as for example glue.

According to an embodiment, each electrode and/or each transducer is in the form of a polygon; preferably in the form of a tetrahedron. In an embodiment, each electrode and/or each transducer is rectangle-shaped or diamond-shaped; preferably square-shaped.

These embodiments are advantageous, for example, regarding standardization of electrodialysis systems, manufacture thereof, maintenance thereof and power consumption.

According to an embodiment, each electrode and each transducer are planar. In an embodiment, the planar cathode and anode of a pair of electrodes are parallel to one another. In this embodiment, each chamber has a mean plane parallel to the planes of the planar electrodes, so that the planar transducers and the mean planes of the chambers are disposed parallel to one another.

This embodiment is advantageous because the planar electrodes and transducers make that the localization and the intensity of ultrasounds are homogenously distributed throughout the chambers and in the treated liquid; so that cleaning of the membrane blocks and/or mixing of the liquid is improved compared, for instance, to prior art modules wherein electrodes and/or transducers are not planar.

This embodiment is also advantageous because the planar electrodes and transducers require less energy input to emits the same amount of ultrasounds in the chambers; so that the energy consumption is minimized compared, for instance, to prior art modules wherein electrodes and/or transducers are not planar.

This embodiment is also advantageous is advantageous because the planar electrodes and transducers make that the localization and the intensity of ultrasounds are homogenously distributed throughout the electrodialysis device, especially in the membrane blocks and in the electrodes; so that material damage (especially to the electrode coating) or premature wear of module constituents is limited or prevented compared, for instance, to prior art modules wherein electrodes and/or transducers are not planar.

In an embodiment, the area of the faces (or "surface") of each transducer is at least 50 %, preferably at least 75%, more preferably at least 90%, furthermore preferably at least 99% of the area of the faces (or "surface") of the electrode to which it is coupled. In a specific embodiment, the area of the faces of each transducer is equal or superior to the area of the faces of the electrode to which it is coupled. In industrial electrodialysis devices, the area of the faces of the electrodes is generally more or less the same as the area of the faces of the membrane cells in the membrane block. In other words, in industrial electrodialysis devices, the area of the faces of the electrodes is generally substantially the same as the area of the faces of the membrane cells in the membrane block.

This embodiment is advantageous because the transducer covering all the surface of the electrode makes that the localization and the intensity of ultrasounds are homogenously distributed in the membrane block and treated liquid; so that cleaning of the membrane block and/or mixing of the liquid is improved compared, for instance, to prior art modules wherein the transducers are smaller than the electrodes.

This embodiment is also advantageous because the transducer covering all the surface of the electrode makes that the localization and the intensity of ultrasounds are homogenously distributed throughout the electrodialysis device, especially in the membrane blocks and in the electrodes; so that material damage (especially to the electrode coating) or premature wear of module constituents is limited or prevented compared, for instance, to prior art modules wherein the transducers are smaller than the electrodes.

According to an embodiment, the electrodialysis device comprises enclosing means so that each transducer of the electrodialysis device forms a closed circuit. In one embodiment, enclosing means comprise closing plates and/or compartments. This embodiment is advantageous because ultrasounds propagation in the closed circuit; so that no ultrasounds is emitted outside of the electrodialysis device (*i.e.,* in the open air) and the efficiency of ultrasounds action is thus improved compared, for instance, to prior art modules wherein the ultrasound transducers are outside of the electrodialysis device.

According to an embodiment, the inlet is configured to introduce raw liquid into the chambers. In an embodiment, the introduction of raw liquid is made by means of an inlet pipe connected to the electrodialysis device's inlet. The liquid is distributed from the inlet through one or multiple ducts provided at or near the bottom, center and/or heads of the gaskets. The liquid is introduced from the duct(s) into slots and into the planar volume between ion exchange membranes. Multi-pass flow configurations may be possible with the interconnection of the outlet of a membrane block to the inlet of another membrane block or by using blocking membranes or spacers in a membrane block.

According to an embodiment, the electrodialysis device is configurated to contain only circulating fluid, *i.e.,* the electrodialysis device does not contain any standing water during normal operation.

According to an embodiment, the first outlet is configured to remove diluted liquid from the chambers; and the second outlet is configurated to remove concentrated liquid from the chambers. In an embodiment, the removal of diluted and/or concentrated liquid is made by means of communication means selected from pipes, slots, ducts and/or spacers. In an embodiment, the introduction of raw liquid is made by means selected from pipes, slots, ducts and/or spacers; the removal of diluted liquid is made by means selected from pipes, slots, ducts and/or spacers and/or the removal of concentrated liquid is made by means selected from pipes, slots, ducts and/or spacers.

According to an embodiment, each electrode pair is supplied by a power supply with power ranging from 0.1 to 500 kW, preferably ranging from 1 to 200 kW. According to an embodiment, each electrode pair is supplied by a power supply with the same power. According to an embodiment, each transducer is supplied discontinuously and/or continuously by a power supply with power ranging from 0.1 to 500 kW, preferably ranging from 1 to 100 kW. According to an embodiment, each transducer is supplied by a power supply with the same power. According to an embodiment, the electrodialysis device (*i.e.,* all electrode pairs and all transducers) is supplied by a power supply with power ranging from 0.2 to 1000 kW per chamber in the device. In an embodiment, the device is supplied by a high power, preferably power ranging from 2 to 300 kW per chamber in the device.

According to an embodiment, at least one transducer in the electrodialysis device emits in mono-frequency. According to an embodiment, at least one transducer in the electrodialysis device emits in multi-frequency. In an embodiment, the multi-frequency program comprises frequency ranging from 20 kHz to 1 MHz with time intervals ranging from 1 ns to 120 s, preferably from 1 s to 60 s. A non-limitative example of multi-frequency program is: 50 kHz for 25 s, 75 kHz for 15 s, 100 kHz for 20 s and repeating this melody from the beginning.

This embodiment is advantageous because multifrequency makes that the frequency of ultrasounds varies in the the membrane block and in the treated liquid; so that cleaning of the membrane block and/or mixing of the liquid is improved compared, for instance, to prior art modules wherein only mono-frequency ultrasounds is used.

According to a first embodiment, all transducers in the electrodialysis device emit at the same frequency, in mono-frequency or multi-frequency. According to a second embodiment, at least two transducers in the electrodialysis device emit at a different frequency. In an embodiment, at least two transducers in the electrodialysis device emit at different multi-frequency programs. According to a third embodiment, all transducers in the electrodialysis device emit at a different frequency. In an embodiment, all transducers in the electrodialysis device emit at different multi-frequency programs.

Preferably, transducers emitting at a different frequency are adjacent to different chambers. This embodiment is advantageous because the frequency of ultrasounds in the membrane block and in the treated liquid may be adjusted according to particulars of the treatment liquid, such as for example ion concentration, organic content, *etc*.; so that cleaning of the membrane block and/or mixing of the liquid is improved compared, for instance, to prior art modules wherein the transducers are smaller than the electrodes.

The invention also relates to an electrodialysis apparatus which is a system comprising two or more electrodialysis modules according to the invention.

According to an embodiment, the electrodialysis system is supplied by a power supply with power ranging from 0.2 to 1000 kW per chamber in the devices. In an embodiment, the electrodialysis system is supplied by a high power, preferably power ranging from 2 to 300 kW per chamber in the devices.

According to an embodiment, all transducers in the electrodialysis system emits at the same frequency, in mono-frequency or multi-frequency, as described above.

The invention also relates to a built-in which is an assembly for an electrodialysis module comprising an ultrasonic transducer and a pair of electrodes each configured to cooperate with a membrane block and comprising successively an electrode, the transducer, and the other electrode disposed parallel to one another; wherein the transducer is coupled with adjacent electrodes by coupling means.

The structure and material of the electrodes may be as described hereinabove.

According to an embodiment, the coupling means are selected from resin, epoxy and glue. In an embodiment, the coupling means are glue. Preferably, the adhesive means is a metallic adhesive. Non-limitative examples of metallic adhesive are polyurethane, silicon, epoxy, cyanoacrylate resins and mixtures thereof.

According to an embodiment, the assembly comprising a second ultrasonic transducer and comprises successively an electrode, the two transducers, and the other electrode disposed parallel to one another; wherein the transducers are coupled together by coupling means; and wherein each transducer is coupled with its adjacent electrode by coupling means. In an embodiment, the two transducers are further separated by an ultrasound-isolating material, as described hereinabove. In a specific embodiment, the two transducers are further coupled with the ultrasound-isolating material by further coupling means, for example the ultrasound-isolating material may be an isolating adhesive (*e.g*., adhesive isolating foam).

According to an embodiment, the transducers do not comprise a polymer coating for preventing adhesion of a transducer to another one when transducers are packed, such as for example polyamide or polyimide coating.

According to an embodiment, there is no separation sheet, especially no rigid separation sheet, between the transducer and adjacent electrodes. In an embodiment, the transducer and adjacent electrodes are in direct physical contact, *i.e.,* that there is no physical separation between the transducer and the electrodes, except optionally coupling means, such as for example glue or metallic adhesive.

According to an embodiment, the electrodes and the transducer are planar. In an embodiment, the area of the faces of the transducer is at least 50 %, preferably at least 75%, more preferably at least 90%, furthermore preferably at least 99% of the area of the faces of the electrodes. In a specific embodiment, the area of the faces of the transducer is equal or superior to the area of the faces of the electrode to which it is coupled. In an embodiment, the area of the faces of the electrodes coupled with a transducer is equal or superior to the area of the faces of the transducer.

According to an embodiment, the transducer is susceptible to emit in mono-frequency or multi-frequency, as described above. According to an embodiment, the transducer is configurated to emit in mono-frequency or multi-frequency, as described hereinabove.

According to an embodiment, the assembly comprises at least one opening configurated to allow fluid circulation through the assembly. In an embodiment, the transducers and electrodes comprise at least one opening configurated to allow fluid circulation through them. In an embodiment, the assembly comprises at least three openings configurated to allow fluid circulation.

The invention also relates to an electrodialysis module which is an electrodialysis device comprising a built-in according to the invention.

### BRIEF DESCRIPTION OF THE DRAWINGS

**Figure 1** and **Figure 2** are diagrams showing the general principle of the operation of an electrodialysis module according to prior art (**Figure 1**) and according to the invention (**Figure 2**).
**Figure 3** and **Figure 4** are exploded views showing a same electrodialysis module according to the invention comprising two chambers (two membrane blocks) from different points of view.
**Figure 5** is a compact view showing an electrodialysis module according to the invention comprising three chambers (three membrane blocks).
**Figure 6****,** **Figure 7** and **Figure 8** are respectively a compact view (**Figure 6**)**,** an exploded view (**Figure 7**) and an exploded view with transparency of compartments elements **(****Figure 8**) showing a same electrodialysis module according to the invention comprising four chambers (four membrane blocks).
**Figure 9** is a schematic representation of the arrangement of electrodes and ultrasonic transducers in the electrodialysis module of **Figure 5****.**
**Figure 10** is a schematic representation of the arrangement of electrodes and ultrasonic transducers in the electrodialysis module of **Figure 6****,** wherein only the first and second chambers and ultrasonic transducers thereof are represented.
**Figure 11** is a schematic representation of the arrangement of an electrodialysis module according to the invention wherein the planar electrodes (211, 212) and planar transducers (601, 602) are coupled together by means of planar adhesives (901, 902) and wherein the chambers are isolated by a planar ultrasound-isolating material (1001) between the two transducers located between the chambers. Due to the presence of the ultrasound-isolating material (1001), two independent multi-frequency program A and B emitted respectively by the first transducer (601) and by the last transducer (602) may be carried out independently within each chamber.

### REFERENCES

- 000: - Electrodialysis device,
- 100: - Chamber,
- 200: - Electrodes,
- 300: - Membrane block,
- 400: - Inlet,
- 500: - Outlet,
- 600: - Ultrasonic transducers,
- 700: - Closing plate,
- 800: - Compartments,
- 900: - Adhesive means,
- 1000: - Ultrasound-isolating material.

### EXAMPLES

The present invention is further illustrated by the following examples.

### Example 1: Fist electrodialysis device according to the invention

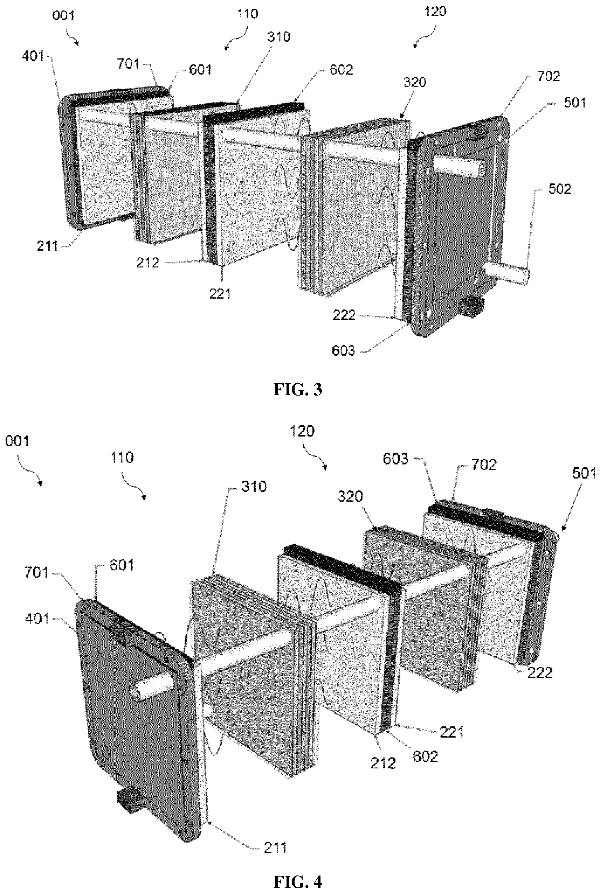

**Figure 3** and **Figure 4** show an electrodialysis device (001) comprising a first chamber (110) and a second chamber (120), wherein each chamber comprises a pair of planar electrodes comprising a planar cathode (211, 221) and a planar anode (212, 222) separated by a membrane block (310, 320), an inlet (401), a first outlet (501), a second outlet (502) and three planar ultrasonic transducers (601, 602, 603). In this example, two closing plates (701, 702) enclose the device. The inlet (401) is in fluid communication with each of the chambers (110, 120) and configured to introduce raw liquid into each of the chambers, and the first outlet (501) and the second outlet (502) are each in fluid communication with each of the chambers (110, 120). The first outlet (501) is configured to remove diluted liquid from the chambers (110, 120). The second outlet (502) is configurated to remove concentrated liquid from the chambers (110, 120). The electrodialysis device thus comprises successively, in a direction from the inlet towards the first and second outlets, a first transducer (601), the first chamber (110), a second transducer (602), the second chamber (120) and the third transducer (603) disposed parallel to one another.

Each transducer is coupled with adjacent electrodes by coupling means which, in this example, are glue, *i.e.,* first transducer (601) is glued with cathode (211), second transducer (602) is glued with anode (212) and with cathode (221) and the third transducer (603) is glued with anode (222). Transducers and electrodes are in direct physical contact.

When the device is used for electrodialysis, power is supplied to electrodes and transducers and raw liquid (RL) is introduced by the inlet (401) in the chambers (110, 120) where it circulates from the inlet (401) to the first outlet (501) where it exits as dilute (DL). Under electric potential difference applied by the electrodes, ions migrate through ion-exchanges membranes inside the membrane block (301, 302) from RL to concentrate (CL) which exits from the second outlet (502). Ultrasounds emitted by the transducers (601, 602, 603) both from the ends of the device and also from the inside the device avoid fouling of the ion-exchange membranes and promote ion transfer by mixing the liquid inside the chambers (110, 120) within all the length of the electrodialysis device.

### Example 2: Second electrodialysis device according to the invention

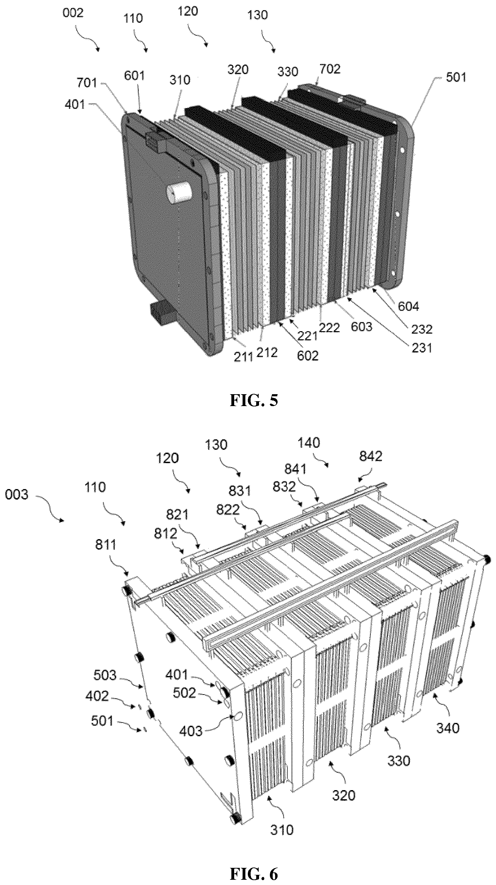

**Figure 5** shows an electrodialysis device (002) similar to the one of Example 1, further comprising a third chamber (130) comprising a pair of planar electrodes comprising a planar cathode (231) and a planar anode (232) and a fourth planar ultrasonic transducer (604). The electrodialysis device thus comprises successively in parallel a first transducer (601), the first chamber (110), a second transducer (602), the second chamber (120), the third transducer (603), the third chamber (130), and the fourth transducer (604). The arrangement of the electrodes (211, 212, 221, 222, 231, 232) relatively to the ultrasonic transducers (601, 602, 603, 604) in the electrodialysis device is represented on **Figure 9****.**

Each transducer is coupled with adjacent electrodes by coupling means which, in this example, are glue, *i.e.,* first transducer (601) is glued with cathode (211), second transducer (602) is glued with anode (212) and with cathode (221), the third transducer (603) is glued with anode (222) and cathode (231), and fourth transducer (604) is glued with anode (232). Transducers and electrodes are in direct physical contact.

### Example 3: Third electrodialysis device according to the invention

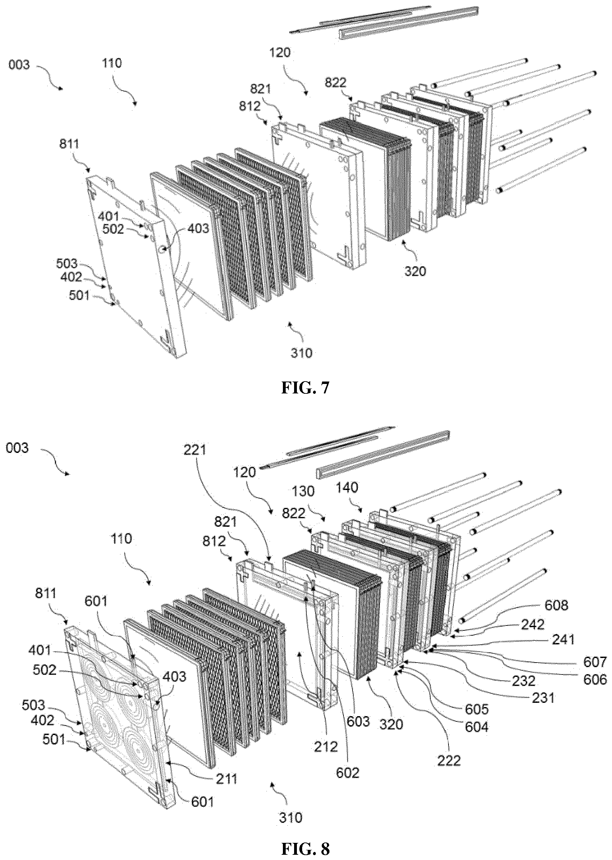

**Figure 6****,** **Figure 7** and **Figure 8** show an electrodialysis device (003) comprising four chambers (110, 120, 130, 140) wherein each chamber comprises a pair of planar electrodes comprising a planar cathode (211, 221,231,241) and a planar anode (212, 222, 232, 242) separated by a membrane block (310, 320, 330, 340), two raw liquid (RL) inlets (401, 402), an electrolyte inlet (403), a first outlet (501), a second outlet (502), an electrolyte outlet (503), and eight planar ultrasonic transducers (601, 602, 603, 604, 605, 606, 607, 608). The arrangement of the electrodes (211, 212, 221, 222) relatively to the ultrasonic transducers (601, 602, 603, 604) in the first and second chambers of the electrodialysis device is represented on **Figure 10** (third and fourth chambers and related transducers thereof are not represented). In this example, each transducer consists of a plurality of four discs configurated to form a planar ultrasonic transducer. In this example, for each chamber, each electrode and planar ultrasonic transducer associated thereto are covered by a compartment (811, 812, 821, 822, 831, 832, 841, 842). The RL inlets (401, 402) are in fluid communication with each of the chambers (110-140) and configured to introduce raw liquid into each of the chambers, and the first outlet (501) and the second outlet (502) are each in fluid communication with each of the chambers (110-140). The first outlet (501) is configured to remove diluted liquid (DL) from the chambers (110-140). The second outlet (502) is configurated to remove concentrated liquid (CL) from the chambers (110-140).

In this example, there are two transducers between each chamber. The electrodialysis device thus comprises successively a first transducer (601), the first chamber (110), a second transducer (602), a third transducer (603), the second chamber (120), a fourth transducer (604), a fifth transducer (605), the third chamber (130), a sixth transducer (606), a seventh transducer (607), the fourth chamber (140), and the eighth transducer (608) disposed parallel to one another.

Each transducer is coupled with adjacent electrodes by coupling means which, in this example, are glue, *i.e.,* first transducer (601) is glued with cathode (211), second transducer (602) is glued with anode (212) and with cathode (221), and so on until transducer (608) which is glued with anode (242). Transducers and electrodes are in direct physical contact.

When the device is used for electrodialysis, power is supplied to electrodes and transducers. Electrolyte is introduced by the electrolyte inlet (403) and circulates though the electrode stream until the electrolyte outlet (503). Raw liquid (RL) is introduced by the RL inlets (401, 402) in the chambers (110-140) where it circulates from the RL inlets (401, 402) to the first outlet (501) where it exits as dilute (DL). Under electric potential difference applied by the electrodes, ions migrate through ion-exchanges membranes inside the membrane block (310-340) from RL to the concentrate (CL) which exits from the second outlet (502). Ultrasounds emitted by the transducers (601-608) avoid fouling of the ion-exchange membranes and promote ion transfer by mixing the liquid inside the chambers (110-140) within all the length of the electrodialysis device, from outside and inside the device.

It is clear from Example 1, Example 2 and Example 3 that any number of additional chambers and transducers may be added to an electrodialysis device according to the invention without changing the operation of the electrodialysis device.

It is also clear from Example 1, Example 2 and Example 3 that ultrasound-isolating sheets may be added in an electrodialysis device according to the invention (e.g., between adjacent transducers in the device of Example 3) without changing the operation of the electrodialysis device.

## Claims

1. Electrodialysis module (001) comprising:
- at least a first chamber (110) and a second chamber (120),
wherein each chamber (110, 120) comprises a pair of planar electrodes (211, 221, 212, 222) comprising a planar cathode (211, 221) and a planar anode (212, 222), parallel to one another and separated by a membrane pack (310, 320), and wherein each chamber (110, 120) has a mean plane parallel to the planes of said planar electrodes (211, 221, 212, 222),
- an inlet (401), a first outlet (501), a second outlet (502),
wherein said inlet is in fluid communication with each of said chambers (110, 120), and said first outlet (501) and said second outlet (502) are each in fluid communication with each of said chambers (110, 120); and wherein said inlet (401) is configured to introduce raw liquid into said chambers (110, 120), said first outlet (501) is configured to remove diluted liquid from said chambers (110, 120), and said second outlet (502) is configured to remove concentrated liquid from said chambers (110, 120), and
- at least three planar ultrasonic transducers (601, 602, 603);
wherein said electrodialysis module (001) comprises successively, in a direction from the inlet (401) towards the first and second outlets (501, 502), a first transducer (601), said first chamber (110), a second transducer (602), said second chamber (120) and the third transducer (603); said transducers (601, 602, 603) and the mean planes of said chambers (110, 120) being disposed parallel to one another.

2. The electrodialysis module according to claim **1** comprising a third chamber (130) and a fourth planar ultrasonic transducer (604); wherein said electrodialysis module (002) comprises successively, in a direction from the inlet (401) towards the first and second outlets (501, 502), a first transducer (601), said first chamber (110), a second transducer (602), said second chamber (120), a third transducer (603), said third chamber (130), and the fourth transducer (604); said transducers (601, 602, 603, 604) and the mean planes of said chambers (110, 120, 130) being disposed parallel to one another.

3. The electrodialysis module according to claim **1** or claim **2** comprising one or more additional chambers and the same number of additional planar ultrasonic transducers; wherein said electrodialysis module comprises successively, in a direction from the inlet towards the first and second outlets, a first transducer before the first chamber, each of said chambers followed by one of said transducers, said transducer being located between two of said chambers, and the last transducer after the last chamber; said transducers and the mean planes of said chambers being disposed parallel to one another.

4. The electrodialysis module according to claim **1** comprising a fourth ultrasonic transducer (604); **characterized in that** said electrodialysis module (003) comprises successively, in a direction from the inlet (401) towards the first and second outlets (501, 502), a first transducer (601), said first chamber (110), a second transducer (602), a third transducer (603), said second chamber (120), and the fourth transducer (604); said transducers (601, 602, 603, 604) and the mean planes of said chambers (110, 120) being disposed parallel to one another.

5. The electrodialysis module according to claim **4** comprising one or more additional chambers and two additional ultrasonic transducers per additional chamber; wherein said electrodialysis module comprises successively, in a direction from the inlet towards the first and second outlets, a first transducer before the first chamber, each of said chambers followed by two of said transducers, said two transducers being located between two of said chambers, and the last transducer after the last chamber; said transducers and the mean planes of said chambers being disposed parallel to one another.

6. The electrodialysis module according to claim **5**, wherein said two transducers located between two of said chambers are separated by a planar ultrasound-isolating material, said material and the transducers being disposed parallel to one another; and wherein the area of the faces of said material is equal or superior to the area of the faces of each of said two transducers.

7. The electrodialysis module according to any one of claims **1** to **6**, wherein each transducer is coupled with adjacent electrodes by coupling means.

8. The electrodialysis module according to any one of claims **1** to **7**, wherein said transducers are configurated to emit in multi-frequency.

9. The electrodialysis module according to claim **8**, wherein at least two of said transducers are configurated to emit in different multi-frequency programs, said transducers being adjacent to different chambers.

10. System comprising two or more electrodialysis modules according to any one of claims **1** to **9.**

11. Planar assembly for an electrodialysis module according to any one of claims **1** to **9**, comprising:
- a planar ultrasonic transducer (602), and
- a pair of planar electrodes (212, 221) each configured to cooperate with a membrane pack (310, 320),
wherein said planar assembly comprises successively an electrode (212), said transducer (602), and the other electrode (221); and wherein said transducer (602) is coupled with said electrodes (212, 221) by coupling means.

12. The planar assembly according to claim **11**, wherein said coupling means are adhesive means, preferably glue such as a metallic adhesive.

13. The planar assembly according to claim **12**, wherein said adhesive means are a metallic adhesive, preferably a metallic adhesive selected from polyurethane, silicon, epoxy, cyanoacrylate resins and mixtures thereof.

14. The planar assembly according to any one of claims **11** to **13**, wherein the surface area of the faces of said transducer (602) is equal or superior to the surface area of the faces of said electrodes (212, 221).

15. The planar assembly according to any one of claims **11** to **14**, wherein each of said electrodes (212, 221) independently consists of:
- a base comprising a metal selected from stainless steel, titanium, graphite, carbon, nickel, platinum and combinations thereof; and
- a coating comprising a metal selected from platinum, ruthenium, mixed metal oxides, graphite, carbon and combinations thereof.

## Patentansprüche

1. Elektrodialysemodul (001), umfassend:
- mindestens eine erste Kammer (110) und eine zweite Kammer (120), wobei jede Kammer (110, 120) ein Paar flacher Elektroden (211, 221, 212, 222) umfasst, eine flache Kathode (221, 221) und eine flache Anode (212, 222) umfassend, die parallel zueinander und durch einen Membranpack (310, 320) getrennt sind, und wobei jede Kammer (110, 120) eine Mittelebene parallel zu den Ebenen der flachen Elektroden (211, 221, 212, 222) aufweist,
- einen Einlass (401), einen ersten Auslass (501), einen zweiten Auslass (502), wobei der Einlass in Fluidverbindung mit jeder der Kammern (110, 120) ist, und der erste Auslass (501) und der zweite Auslass (502) jeweils in Fluidverbindung mit jeder der Kammern (110, 120) ist; und wobei der Einlass (401) konfiguriert ist, um Rohflüssigkeit in die Kammern (110, 120) einzuführen, der erste Auslass (501) konfiguriert ist, um verdünnte Flüssigkeit aus den Kammern (110, 120) zu entfernen, und der zweite Auslass (502) konfiguriert ist, um konzentrierte Flüssigkeit aus den Kammern (110, 120) zu entfernen, und
- mindestens drei flache Ultraschallwandler (601, 602, 603);
wobei das Elektrodialysemodul (001) nacheinander in einer Richtung vom Einlass (401) zum ersten und zweiten Auslass (501, 502), einen ersten Wandler (601), die erste Kammer (110), einen zweiten Wandler (602), die zweite Kammer (120) und den dritten Wandler (603) umfasst; wobei die Wandler (601, 602, 603) und die Mittelebenen der Kammern (110, 120) parallel zueinander angeordnet sind.

2. Elektrodialysemodul nach Anspruch **1**, eine dritte Kammer (130) und einen vierten flachen Ultraschallwandler (604) umfassend; wobei das Elektrodialysemodul (002) nacheinander in einer Richtung vom Einlass (401) zum ersten und zweiten Auslass (501, 502), einen ersten Wandler (601), die erste Kammer (110), einen zweiten Wandler (602), die zweite Kammer (120), einen dritten Wandler (603), die dritte Kammer (130) und den vierten Wandler (604) umfasst; wobei die Wandler (601, 602, 603, 604) und die Mittelebenen der Kammern (110, 120, 130) parallel zueinander angeordnet sind.

3. Elektrodialysemodul nach Anspruch **1** oder Anspruch **2**, eine oder mehrere zusätzliche Kammern und dieselbe Anzahl von zusätzlichen flachen Ultraschallwandlern umfassend; wobei das Elektrodialysemodul nacheinander in einer Richtung vom Einlass zum ersten und zweiten Auslass einen ersten Wandler vor der ersten Kammer umfasst, wobei einer der Wandler auf jede der Kammern folgt, wobei sich der Wandler zwischen zwei der Kammern befindet, und der letzte Wandler nach der letzten Kammer; wobei die Wandler und die Mittelebenen der Kammern parallel zueinander angeordnet sind.

4. Elektrodialysemodul nach Anspruch **1**, umfassend einen vierten Ultraschallwandler (604); **dadurch gekennzeichnet, dass** das Elektrodialysemodul (003) nacheinander in einer Richtung vom Einlass (401) zum ersten und zweiten Auslass (501, 502) einen ersten Wandler (601), die erste Kammer (110), einen zweiten Wandler (602), einen dritten Wandler (603), die zweite Kammer (120) und den vierten Wandler (604) umfasst; wobei die Wandler (601, 602, 603, 604) und die Mittelebenen der Kammern (110, 120) parallel zueinander angeordnet sind.

5. Elektrodialysemodul nach Anspruch **4**, umfassend eine oder mehrere zusätzliche Kammern und zwei zusätzliche Ultraschallwandler je zusätzlicher Kammer; wobei das Elektrodialysemodul nacheinander in einer Richtung vom Einlass zum ersten und zweiten Auslass einen ersten Wandler vor der ersten Kammer umfasst, zwei der Wandler auf jede der Kammern folgen, sich die beiden Wandler zwischen zwei der Kammern befinden, und der letzte Wandler nach der letzten Kammer; wobei die Wandler und die Mittelebenen der Kammern parallel zueinander angeordnet sind.

6. Elektrodialysemodul nach Anspruch **5**, wobei die beiden Wandler, die sich zwischen zwei der Kammern befinden, durch ein flaches ultraschallisolierendes Material getrennt sind, wobei das Material und die Wandler parallel zueinander angeordnet sind; und wobei der Bereich der Seiten des Materials größer oder gleich dem Bereich der Seiten jedes der beiden Wandler ist.

7. Elektrodialysemodul nach einem der Ansprüche **1** bis **6,** wobei jeder Wandler durch Kopplungsmittel an angrenzende Elektroden gekoppelt ist.

8. Elektrodialysemodul nach einem der Ansprüche **1** bis 7, wobei die Wandler konfiguriert sind, um in Mehrfrequenz zu senden.

9. Elektrodialysemodul nach Anspruch **8**, wobei mindestens zwei der Wandler konfiguriert sind, um in verschiedenen Mehrfrequenzprogrammen zu senden, wobei die Wandler an verschiedene Kammern angrenzend sind.

10. System, umfassend zwei oder mehr Elektrodialysemodule nach einem der Ansprüche **1** bis **9.**

11. Flache Anordnung für ein Elektrodialysemodul nach einem der Ansprüche **1** bis **9**, umfassend:
- einen flachen Ultraschallwandler (602), und
- ein Paar flacher Elektroden (212, 221), wobei jede konfiguriert ist, um mit einem Membranpack (310, 320) zusammenzuwirken,
wobei die flache Anordnung nacheinander eine Elektrode (212), den Wandler (602) und die andere Elektrode (221) umfasst; und wobei der Wandler (602) durch Kopplungsmittel an die Elektroden (212, 221) gekoppelt ist.

12. Flache Anordnung nach Anspruch **11**, wobei die Kopplungsmittel Haftmittel, vorzugsweise Klebstoff, wie ein metallisches Haftmittel sind.

13. Flache Anordnung nach Anspruch **12**, wobei die Haftmittel ein metallisches Haftmittel, vorzugsweise ein metallisches Haftmittel sind, das aus Polyurethan, Silikon, Epoxid, Cyanacrylat-Harzen und Gemischen davon ausgewählt wird.

14. Flache Anordnung nach einem der Ansprüche **11** bis **13**, wobei der Oberflächenbereich der Seiten des Wandlers (602) größer oder gleich dem Oberflächenbereich der Seiten der Elektroden (212, 221) ist.

15. Flache Anordnung nach einem der Ansprüche **11** bis **14**, wobei jede der Elektroden (212, 221) unabhängig besteht aus:
- einer Basis, ein Metall umfassend, das aus nichtrostendem Stahl, Titan, Grafit, Kohlenstoff, Nickel, Platin und Kombinationen daraus ausgewählt wird; und
- eine Beschichtung, ein Metall umfassend, das aus Platin, Ruthenium, gemischten Metalloxiden, Grafit, Kohlenstoff und Kombinationen daraus ausgewählt wird.

## Revendications

1. Module d'électrodialyse (001) comprenant :
- au moins une première chambre (110) et une deuxième chambre (120),
dans lequel chaque chambre (110, 120) comprend une paire d'électrodes planes (211, 221, 212, 222) comprenant une cathode plane (211, 221) et une anode plane (212, 222), parallèles l'une à l'autre et séparées par un paquet de membranes (310, 320), et dans lequel chaque chambre (110, 120) a un plan moyen parallèle aux plans desdites électrodes planes (211, 221, 212, 222),
- un orifice d'entrée (401), un premier orifice de sortie (501), un second orifice de sortie (502),
dans lequel ledit orifice d'entrée est en communication de fluide avec chacune desdites chambres (110, 120), et ledit premier orifice de sortie (501) et ledit second orifice de sortie (502) sont chacun en communication de fluide avec chacune desdites chambres (110, 120) ; et dans lequel ledit orifice d'entrée (401) est configuré pour introduire un liquide brut dans lesdites chambres (110, 120), ledit premier orifice de sortie (501) est configuré pour retirer du liquide dilué desdites chambres (110, 120), et ledit second orifice de sortie (502) est configuré pour retirer du liquide concentré desdites chambres (110, 120), et
- au moins trois transducteurs (601, 602, 603) ultrasoniques plans ;
dans lequel ledit module d'électrodialyse (001) comprend successivement, dans une direction depuis l'orifice d'entrée (401) vers les premier et second orifices de sortie (501, 502), un premier transducteur (601), ladite première chambre (110), un deuxième transducteur (602), ladite deuxième chambre (120) et le troisième transducteur (603) ; lesdits transducteurs (601, 602, 603) et les plans moyens desdites chambres (110, 120) étant disposés parallèles les uns aux autres.

2. Module d'électrodialyse selon la revendication **1** comprenant une troisième chambre (130) et un quatrième transducteur (604) ultrasonique plan ; dans lequel ledit module d'électrodialyse (002) comprend successivement, dans une direction depuis l'orifice d'entrée (401) vers les premier et second orifices de sortie (501, 502), un premier transducteur (601), ladite première chambre (110), un deuxième transducteur (602), ladite deuxième chambre (120), un troisième transducteur (603), ladite troisième chambre (130), et le quatrième transducteur (604) ; lesdits transducteurs (601, 602, 603, 604) et les plans moyens desdites chambres (110, 120, 130) étant disposés parallèles les uns aux autres.

3. Module d'électrodialyse selon la revendication **1** ou la revendication **2** comprenant une ou plusieurs chambres supplémentaires et le même nombre de transducteurs ultrasoniques plans ; dans lequel ledit module d'électrodialyse comprend successivement, dans une direction depuis l'orifice d'entrée vers les premier et second orifices de sortie, un premier transducteur avant la première chambre, chacune desdites chambres suivies par un desdits transducteurs, ledit transducteur étant situé entre deux desdites chambres, et le dernier transducteur après la dernière chambre ; lesdits transducteurs et les plans moyens desdites chambres étant disposés parallèles les uns aux autres.

4. Module d'électrodialyse selon la revendication **1** comprenant un quatrième transducteur (604) ultrasonique ; **caractérisé en ce que** ledit module d'électrodialyse (003) comprend successivement, dans une direction depuis l'orifice d'entrée (401) vers les premier et second orifices de sortie (501, 502), un premier transducteur (601), ladite première chambre (110), un deuxième transducteur (602), un troisième transducteur (603), ladite deuxième chambre (120), et le quatrième transducteur (604) ; lesdits transducteurs (601, 602, 603, 604) et les plans moyens desdites chambres (110, 120) étant disposés parallèles les uns aux autres.

5. Module d'électrodialyse selon la revendication **4** comprenant une ou plusieurs chambres supplémentaires et deux transducteurs ultrasoniques supplémentaires par chambre supplémentaire ; dans lequel ledit module d'électrodialyse comprend successivement, dans une direction depuis l'orifice d'entrée vers les premier et second orifices de sortie, un premier transducteur avant la première chambre, chacune desdites chambres suivies par deux desdits transducteurs, lesdits deux transducteurs étant situés entre deux desdites chambres, et le dernier transducteur après la dernière chambre ; lesdits transducteurs et les plans moyens desdites chambres étant disposés parallèles les uns aux autres.

6. Module d'électrodialyse selon la revendication **5**, dans lequel lesdits deux transducteurs situés entre deux desdites chambres sont séparés par un matériau isolant des ultrasons plan, ledit matériau et les transducteurs étant disposés parallèles les uns aux autres ; et dans lequel la superficie des faces dudit matériau est égale ou supérieure à la superficie des faces de chacun desdits deux transducteurs.

7. Module d'électrodialyse selon l'une quelconque des revendications **1** à **6**, dans lequel chaque transducteur est couplé à des électrodes adjacentes par des moyens de couplage.

8. Module d'électrodialyse selon l'une quelconque des revendications **1** à **7**, dans lequel lesdits transducteurs sont configurés pour émettre en multifréquence.

9. Module d'électrodialyse selon la revendication **8**, dans lequel au moins deux desdits transducteurs sont configurés pour émettre dans différents programmes multifréquences, lesdits transducteurs étant adjacents à différentes chambres.

10. Système comprenant deux modules d'électrodialyse ou plus selon l'une quelconque des revendications **1** à **9.**

11. Ensemble plan pour un module d'électrodialyse selon l'une quelconque des revendications **1** à **9**, comprenant :
- un transducteur (602) ultrasonique plan, et
- une paire d'électrodes planes (212, 221) chacune configurée pour coopérer avec un paquet de membranes (310, 320),
dans lequel ledit ensemble plan comprend successivement une électrode (212), ledit transducteur (602), et l'autre électrode (221) ; et dans lequel ledit transducteur (602) est couplé auxdites électrodes (212, 221) par des moyens de couplage.

12. Ensemble plan selon la revendication **11**, dans lequel lesdits moyens de couplage sont des moyens adhésifs, de préférence de la colle telle qu'un adhésif pour métal.

13. Ensemble plan selon la revendication **12**, dans lequel lesdits moyens adhésifs sont un adhésif pour métal, de préférence un adhésif pour métal sélectionné parmi du polyuréthanne, de la silicone, de l'époxy, des résines cyanoacrylates et des mélanges de ceux-ci.

14. Ensemble plan selon l'une quelconque des revendications **11** à **13**, dans lequel la superficie de surface des faces dudit transducteur (602) est égale ou supérieure à la superficie de surface des faces desdites électrodes (212, 221).

15. Ensemble plan selon l'une quelconque des revendications **11** à **14**, dans lequel chacune desdites électrodes (212, 221) consiste indépendamment en :
- une base comprenant un métal sélectionné parmi de l'acier inoxydable, du titane, du graphite, du carbone, du nickel, du platine et des combinaisons de ceux-ci ; et
- un revêtement comprenant un métal sélectionné parmi du platine, du ruthénium, des oxydes de métal mixtes, du graphite, du carbone et des combinaisons de ceux-ci.
